# EUROPÄISCHE PATENTSCHRIFT

(11) **EP 3 067 669 B1**
(45) Veröffentlichungstag und Bekanntmachung des Hinweises auf die Patenterteilung: **01.03.2017**
(21) Anmeldenummer: 16152290.9
(22) Anmeldetag: 21.01.2016
(51) Int. Cl.: G01D 5/347

(54) **OPTOELEKTRONISCHE VORRICHTUNG ZUM ERFASSEN EINER LÄNGEN- UND WINKELINFORMATION**
OPTOELECTRONIC DEVICE FOR DETECTING LENGTH AND ANGLE INFORMATION
DISPOSITIF OPTOELECTRONIQUE DESTINE A DETECTER UNE INFORMATION ANGULAIRE OU LONGITUDINALE

(30) Priorität: 13.03.2015 DE 102015103744
(43) Veröffentlichungstag der Anmeldung: 14.09.2016
(73) Patentinhaber: SICK STEGMANN GmbH, 78166 Donaueschingen (DE)
(72) Erfinder: Tabler, Eduard, 78050 Villingen-Schwenningen (DE); Girke, Jürgen, 78549 Spaichingen (DE); Weisser, Rafael, 78112 St. Georgen (DE)
(74) Vertreter: Ludewigt, Christoph

(56) Entgegenhaltungen:
- EP-A1- 2 730 894
- DE-C1- 10 242 169
- DE-U1- 29 915 998
- US-A1- 2009 108 188

## Beschreibung

Die Erfindung betrifft eine optoelektronische Vorrichtung zum Erfassen einer Längen- bzw. Winkelinformation zweier relativ zu einander sich bewegenden Objekten.

Zum Erfassen von Längen- bzw. Winkelinformation zweier relativ zueinander sich bewegenden Objekten sind verschiedene Messsysteme mit unterschiedlichen Messprinzipien bekannt. Hierbei umfassen die Messsysteme optoelektronische Vorrichtungen, wie z.B. Encoder, die nach dem Prinzip der photoelektrischen Abtastung arbeiten.

Bei der photoelektrischen Abtastung umfasst die optoelektronische Vorrichtung in der Regel eine Maßverkörperung und einen Abtaster. Die Maßverkörperung besteht aus einem Maßstab oder einer Codescheibe, auf dem bzw. auf der die Längen- bzw. Winkelinformation in Form eines Codes aufgetragen ist. Der Abtaster umfasst im Wesentlichen einen Sender, der aus zumindest einer Lichtquelle besteht, und einen Empfänger, der aus zumindest einer Sensoreinheit besteht, die z.B. ein Fotodiodenarray umfasst.

Ferner sind der Abtaster meistens starr an der optoelektronischen Vorrichtung und die Maßverkörperung fest an einem sich relativ zu der optoelektronischen Vorrichtung bewegenden Objekt, wie z.B. einer Welle, befestigt.

Die zumindest eine Lichtquelle des Senders strahlt Licht in Richtung der zumindest einen Sensoreinheit des Empfängers, wobei die Maßverkörperung im Lichtgang zwischen dem Sender und dem Empfänger angeordnet ist, so dass bei einer Bewegung des Objektes sich die Maßverkörperung relativ zu der zumindest einen Lichtquelle des Senders bewegt und der Code auf dem Maßstab bzw. auf der Codescheibe sich verändernde Lichtimpulse auf der zumindest einen Sensoreinheit erzeugt.

Eine Auswerteeinheit wertet die in den sich verändernden Lichtimpulsen enthaltenen Informationen aus und leitet die Informationen als Signale an beispielweise eine Steuerung weiter.

Solch einen Aufbau einer optoelektronischen Vorrichtung erfordert eine gegenüberliegende Anordnung des Senders zu dem Empfänger, damit das vom Sender ausgesendete Licht bei einem sogenannten Durchlichtverfahren die Maßverkörperung durchstrahlt und von dem Empfänger erfasst werden kann. Dies führt zu dem Nachteil, dass sich die Baugröße der optoelektronischen Vorrichtung vergrößert.

Aus EP 2 730 894 A1, DE 102 42 169 C1, US 2009/108188 A1 oder DE 299 15 998 U1 ist jeweils ein optoelektronischer Sensor bekannt, der zumindest einen Lichtsender, eine Maßverkörperung, einen Empfänger und eine Lichtleitereinheit umfasst. Die Lichtleitereinheit leitet Licht des Lichtsenders zum Lichtempfänger, wobei das vom Lichtsender ausgesendete Licht durch die Maßverkörperung durchgeht.

Die beschriebene optoelektronische Vorrichtung erfordert eine präzise Anbringung des Senders, der Maßverkörperung und des Empfängers zueinander, so dass die Herstellung der optoelektronischen Vorrichtung schwierig und damit teuer ist.

Es ist daher eine Aufgabe der Erfindung, eine optoelektronische Vorrichtung zum Erfassen einer Längen- bzw. Winkelinformation zur Verfügung zu stellen, die kompakt ist.

Die Aufgabe wird erfindungsgemäß gelöst durch eine optoelektronische Vorrichtung zum Erfassen einer Längen- bzw. Winkelinformation, mit einer Maßverkörperung, einer bedruckten Leiterplatte, die eine erste bedruckbare Seite und eine der ersten bedruckbaren Seite gegenüberliegende zweite bedruckbare Seite aufweist, zumindest einer Lichtquelle, und zumindest einer Sensoreinheit, wobei die zumindest eine Lichtquelle auf der ersten bedruckbaren Seite und die zumindest eine Sensoreinheit auf der zweiten bedruckbaren Seite der bedruckten Leiterplatte angeordnet sind, und wobei zumindest eine Lichtleitereinheit vorgesehen ist, die das von der zumindest einen Lichtquelle durch eine Öffnung in der bedruckten Leiterplatte ausgesendete Licht auf die zweite bedruckbare Seite der bedruckten Leiterplatte derart leitet, dass das ausgesendete Licht senkrecht auf die Maßverkörperung trifft, die vor der zumindest einen Sensoreinheit angeordnet ist.

Gemäß einem bevorzugten Ausführungsbeispiel ist die zumindest eine Lichtquelle mittels eines Reflow Prozesses auf die bedruckte Leiterplatte derart verlötet, dass die zumindest eine Lichtquelle über der Öffnung der bedruckten Leiterplatte angeordnet ist. Hierdurch ergibt sich der Vorteil, dass bei der Anbringung der zumindest einen Lichtquelle keine große Präzision erforderlich ist, so dass die Herstellung der optoelektronischen Vorrichtung einfach und preisgünstig ist.

Gemäß einem weiteren bevorzugten Ausführungsbeispiel besteht die Öffnung der bedruckten Leiterplatte aus einer Durchbohrung, so dass einfache Herstellungsverfahren anwendbar sind, wodurch eine Kostenreduzierung bei der Herstellung erzielbar ist.

Gemäß einem weiteren bevorzugten Ausführungsbeispiel ist die zumindest eine Lichtleitereinheit direkt über der Öffnung und auf der zweiten bedruckbaren Seite der bedruckten Leiterplatte angeordnet.

Ferner weist gemäß einem weiteren bevorzugten Ausführungsbeispiel die zumindest eine Lichtleitereinheit zwei zu der zweiten bedruckbaren Seite der bedruckten Leiterplatte schräggestellten Seitenflächen auf, die seitensymmetrisch zueinander angeordnet sind, wobei die Symmetrieachse die Mittelachse der zumindest einen Lichtleitereinheit ist.

Gemäß einem weiteren bevorzugten Ausführungsbeispiel weist die zumindest eine Lichtleitereinheit eine Trapezform auf, deren parallele Seiten parallel zu der zweiten bedruckbaren Seite der bedruckten Leiterplatte angeordnet sind und die längere parallele Seite der Trapezform zwischen der zweiten bedruckbaren Seite der bedruckten Leiterplatte und der kürzeren parallelen Seite der Trapezform liegt.

Weiterhin weist gemäß einem weiteren bevorzugten Ausführungsbeispiel die zumindest eine Lichtleitereinheit einen zylindrischen Abschnitt zwischen der Öffnung der bedruckten Leiterplatte und der Trapezform auf. Hierdurch kann das ausgesendete Licht vorteilhafterweise gebündelt an den trapezförmigen Körper der zumindest einen Lichtleitereinheit geleitet werden.

Gemäß einem weiteren bevorzugten Ausführungsbeispiel sind die Außenflächen der schräggestellten Seitenflächen der zumindest einen Lichtleitereinheit beschichtet, so dass ein Spiegeleffekt im Inneren der zumindest einen Lichtleitereinheit erzeugbar ist. Hierdurch ergibt sich der Vorteil, dass das ausgesendete Licht auf die zumindest eine Sensoreinheit total zurückreflektiert werden kann.

Gemäß einem weiteren bevorzugten Ausführungsbeispiel weist die zumindest eine Lichtleitereinheit eine Prisma-Form auf, deren Grundseite der Maßverkörperung und der zumindest einen Sensoreinheit zugewendet ist. Die Prisma-Form ist vorteilhafterweise simpler als die Trapezform herstellbar.

Weiterhin weist die Prisma-Form gemäß einem weiteren bevorzugten Ausführungsbeispiel ein gleichschenkliges Dreieck mit der Grundseite und zwei Seitenflächen auf.

Gemäß einem weiteren bevorzugten Ausführungsbeispiel sind die Außenflächen der zwei Seitenflächen der zumindest einen Lichtleitereinheit unbeschichtet und die Prisma-Form ist derart verarbeitet, dass das ausgesendete Licht durch die zwei Seitenflächen in Richtung der zumindest einen Sensoreinheit total reflektierbar ist. Somit kann der Schritt der Beschichtung der Außenfläche bei der Herstellung der zumindest einen Lichtleitereinheit eingespart werden, wodurch Material- und Herstellungskosten eingespart werden können.

Gemäß einem weiteren bevorzugten Ausführungsbeispiel weist die zumindest eine Lichtleitereinheit eine gleichmäßige Abstrahlung am Lichtaustritt auf die Maßverkörperung auf. Durch die Wahl der geeigneten Körperform und des Materials der zumindest einen Lichtleitereinheit kann vorteilhafterweise Streulicht und somit Fehler bei der Erfassung der Längen- bzw. Winkelinformation minimiert werden.

Gemäß einem weiteren bevorzugten Ausführungsbeispiel ist die zumindest eine Lichtleitereinheit auf die zweite bedruckbare Seite der bedruckten Leiterplatte gesteckt, geklebt, gelötet oder dergleichen befestigt. Hierdurch ergibt sich der Vorteil einer kostengünstigen und einfachen Herstellung der optoelektronischen Vorrichtung.

Gemäß einem weiteren bevorzugten Ausführungsbeispiel ist die Maßverkörperung gegenüber der zumindest einen Lichtquelle und der zumindest einen Lichtleitereinheit derart angeordnet, dass das ausgesendete Licht von der zumindest einen Lichtquelle seitlich an der Maßverkörperung vorbei zu der zumindest einen Lichtleitereinheit leitbar ist oder das ausgesendete Licht von der zumindest einen Lichtquelle durch die Maßverkörperung zu der zumindest einen Lichtleitereinheit leitbar ist.

Die erfindungsgemäße Vorrichtung kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung eines ersten Ausführungsbeispiels einer erfindungsgemäßen optoelektronischen Vorrichtung,
- Fig. 2: eine schematische Darstellung eines zweiten Ausführungsbeispiels der erfindungsgemäßen optoelektronischen Vorrichtung, und
- Fig. 3a, 3b: eine schematische Darstellung eines dritten Ausführungsbeispiels der erfindungsgemäßen optoelektronischen Vorrichtung.

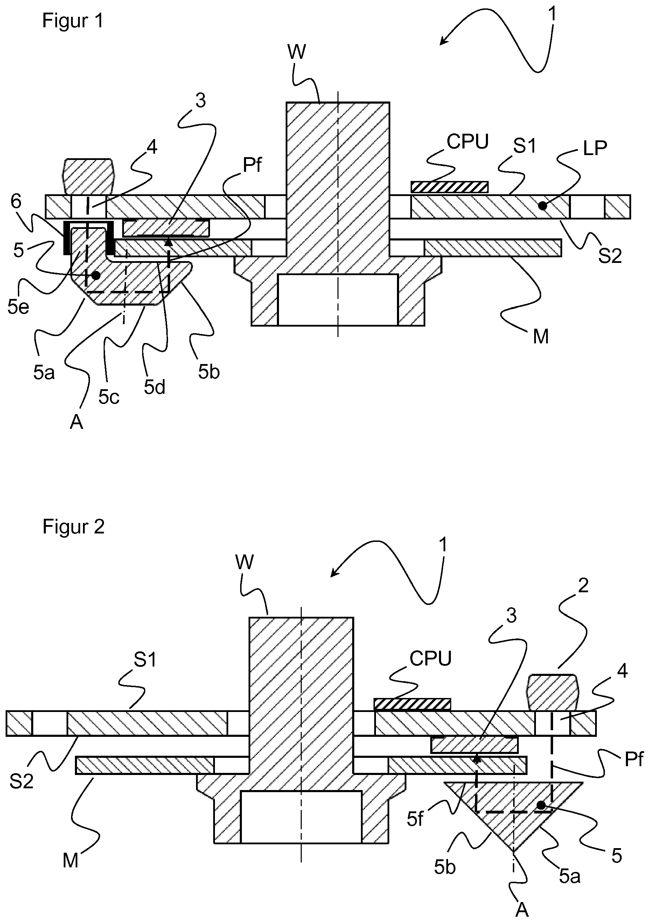

In der Figur 1 ist ein schematischer Aufbau einer erfindungsgemäßen optoelektronischen Vorrichtung 1 gezeigt, die zum Erfassen einer Längen- bzw. Winkelinformation vorgesehen ist.

Bei dem gezeigten Ausführungsbeispiel der erfindungsgemäßen optoelektronischen Vorrichtung 1 dient die optoelektronische Vorrichtung 1 dazu, die Winkelinformation einer sich drehenden Welle W einer Maschine, z.B. eines Motors, zu erfassen.

Hierzu umfasst die optoelektronische Vorrichtung 1 eine bedruckte Leiterplatte LP, die unbeweglich zu der Welle W und gegenüber einem Ende der Welle W angeordnet ist. Die bedruckte Leiterplatte LP weist eine erste bedruckbare Seite S1, die dem Ende der Welle W abgewandt ist, und eine der ersten Seite S1 gegenüberliegende zweite bedruckbare Seite S2, die dem Ende der Welle W zugewandt ist, auf.

Gemäß dem Ausführungsbeispiel kann auf der ersten bedruckbaren Seite S1 der bedruckten Leiterplatte LP eine Auswerteelektronik CPU angeordnet sein.

Die optoelektronische Vorrichtung 1 umfasst ferner eine Maßverkörperung M, die starr an dem der zweiten Seite S2 der bedruckten Leiterplatte LP gegenüberliegenden Ende der Welle W befestigt ist, so dass die Maßverkörperung M mit der Welle W mitdrehen kann.

Weiterhin weist die optoelektronische Vorrichtung 1 zumindest eine Lichtquelle 2, insbesondere eine LED, und zumindest eine Sensoreinheit 3 auf. Die zumindest eine Lichtquelle 2 ist zum Aussenden von Licht vorgesehen, das von der zumindest einen Sensoreinheit 3 erfasst wird.

Hierbei umfasst die zumindest eine Sensoreinheit 3 Fotoelemente, insbesondere Fotodiode oder Fotodiodenarray, die das erfasste Licht an die Auswerteelektronik CPU weiterleitet.

Erfindungsgemäß ist die zumindest eine Lichtquelle 2 auf der ersten bedruckbaren Seite S1 der bedruckten Leiterplatte LP vorgesehen. Die zumindest eine Sensoreinheit 3 ist auf der zweiten bedruckbaren Seite S2 der bedruckten Leiterplatte LP vorgesehen. D.h. die zumindest eine Lichtquelle 2 und die zumindest eine Sensoreinheit 3 sind auf unterschiedlichen Seiten S1, S2 der bedruckten Leiterplatte LP angeordnet, so dass lediglich eine Dicke der bedruckten Leiterplatte LP die zumindest eine Lichtquelle 2 von der zumindest einen Sensoreinheit 3 trennt.

Die bedruckte Leiterplatte LP weist eine Öffnung 4 auf, die insbesondere aus einer Durchbohrung besteht. Die zumindest eine Lichtquelle 2 ist vorteilhafterweise über die Öffnung 4 der bedruckten Leiterplatte LP angeordnet und ist vorzugsweise mittels eines Reflow Prozesses auf die bedruckte Leiterplatte LP verlötet.

Zumindest eine Lichtleitereinheit 5 ist erfindungsgemäß vorgesehen, die das von der zumindest einen Lichtquelle 2 durch die Öffnung 4 in der bedruckten Leiterplatte LP ausgesendete Licht auf die zweite bedruckbare Seite S2 der bedruckten Leiterplatte LP derart leitet, dass das ausgesendete Licht senkrecht auf die Maßverkörperung M trifft, wobei die Maßverkörperung M vor der zumindest einen Sensoreinheit 3 angeordnet ist.

D.h. das von der auf der ersten bedruckbaren Seite S1 der Leiterplatte LP vorgesehenen zumindest einen Lichtquelle 2 ausgesendete Licht wird durch die Öffnung 4 mittels der zumindest einen Lichtleitereinheit 5 auf die zweite bedruckbare Seite S2 der bedruckten Leiterplatte LP geleitet und senkrecht auf die Maßverkörperung M gestrahlt, so dass die nach der Maßverkörperung M auf der zweiten bedruckbaren Seite S2 der Leiterplatte LP angeordnete, zumindest eine Sensoreinheit 3 das ausgesendete Licht erfassen kann.

Der beschriebene Verlauf des von der zumindest einen Lichtquelle 2 ausgesendeten Lichts ist durch den Pfeil Pf schematisch in der Figur 1 dargestellt.

Hierdurch ist die erfindungsgemäße optoelektronische Vorrichtung 1 sehr flach ausgebildet, wodurch die gesamte Anordnung platzsparend ist.

Die zumindest eine Lichtleitereinheit 5 ist direkt über der Öffnung 4 und auf der zweiten bedruckbaren Seite S2 der bedruckten Leiterplatte LP angeordnet. Hierbei weist die zumindest eine Lichtleitereinheit 5 zwei zu der zweiten bedruckbaren Seite S2 der bedruckten Leiterplatte LP schräggestellten Seitenflächen 5a und 5b auf, die seitensymmetrisch zu einander angeordnet sind, wobei die Symmetrieachse die Mittelachse A der zumindest einen Lichtleitereinheit 5 ist.

Die zumindest eine Lichtleitereinheit 5 weist somit eine Trapezform auf, deren parallele Seiten 5c und 5d parallel zu der zweiten bedruckbaren Seite S2 der bedruckten Leiterplatte LP angeordnet sind und die längere parallele Seite 5d der Trapezform liegt zwischen der zweiten bedruckbaren Seite S2 der bedruckten Leiterplatte LP und der kürzeren parallelen Seite 5c der Trapezform.

Vorteilhafterweise weist die zumindest eine Lichtleitereinheit 5 einen zylindrischen Abschnitt 5e auf, der zwischen der Öffnung 4 der bedruckten Leiterplatte LP und der Trapezform vorgesehen ist, so dass das von der zumindest einen Lichtquelle 2 ausgesendete Licht auf die schräggestellte Seite 5a der Trapezform der zumindest einen Lichtleitereinheit 5 geleitet werden kann. Hierbei ist vorteilhafterweise der zylindrische Abschnitt 5e mit einer lichtundurchlässigen Schicht ummantelt, die vorzugsweise eine Hülse 6 sein kann.

Eine schematische Darstellung eines zweiten bevorzugten Ausführungsbeispiels der erfindungsgemäßen optoelektronischen Vorrichtung 1 ist in der Figur 2 gezeigt, wobei die gleichen Komponenten wie bei dem ersten Ausführungsbeispiel der Figur 1 dieselben Bezugszeichen aufweisen.

Bei dem zweiten Ausführungsbeispiel weist die zumindest eine Lichtleitereinheit 5 eine Prisma-Form auf, deren Grundseite 5f der Maßverkörperung M und der zumindest einen Sensoreinheit 3 zugewendet ist. Die Prisma-Form ist derart positioniert, dass die zumindest eine Lichtquelle 2 im Wesentlichen auf einer Seite und die zumindest eine Sensoreinheit 3 auf der anderen Seite der Mittelachse A der Prisma-Form angeordnet sind.

Dadurch kann das von der zumindest einen Lichtquelle 2 ausgesendete Licht entlang des schematisch dargestellten Pfeils Pf auf die eine schräggestellte Seitenfläche 5a der Prisma-Form auftreffen, von der das ausgesendete Licht in Richtung der zweiten schräggestellten Seitenfläche 5b der Prisma-Form geleitet wird. Das ausgesendete Licht wird dann von der zweiten schräggestellten Seitenfläche 5b der Prisma-Form zurück auf die zumindest eine Sensoreinheit 3 reflektiert, so dass eine Totalreflexion des ausgesendeten Lichts stattfindet.

Hierbei weist die Prisma-Form vorteilhafterweise ein gleichschenkliges Dreieck mit der Grundseite 5f und den zwei Seitenflächen 5a, 5b auf, so dass das ausgesendete Licht im Wesentlichen ohne Verlust und senkrecht auf die zumindest eine Sensoreinheit 3 rückreflektiert werden kann.

Durch den beschriebenen Aufbau der Prisma-Form der Lichtleitereinheit 5 sind die Außenflächen der zwei Seitenflächen 5a, 5b der zumindest einen Lichtleitereinheit 5 unbeschichtet. Ferner ist die Prisma-Form optisch derart verarbeitet, so dass das ausgesendete Licht durch die zwei Seitenflächen 5a, 5b in Richtung der zumindest einen Sensoreinheit 3 total rückreflektierbar ist.

Gemäß beider, in den Figuren 1 und 2 gezeigter Ausführungsbeispiele der erfindungsgemäßen optoelektronischen Vorrichtung 1 ist die zumindest eine Lichtleitereinheit 5 derart verarbeitet, dass sie eine gleichmäßige Abstrahlung am Lichtaustritt auf die Maßverkörperung M aufweist. Durch die Wahl eines geeigneten Materials für die zumindest eine Lichtleitereinheit 5 ist eine optimale Transmission des ausgesendeten Lichts durch die zumindest eine Lichtleitereinheit 5 gewährleistet.

Ferner ist die Maßverkörperung M gegenüber der zumindest einen Lichtquelle 2 und der zumindest einen Lichtleitereinheit 5 derart angeordnet, dass das ausgesendete Licht von der zumindest einen Lichtquelle 2 seitlich an der Maßverkörperung M vorbei zu der zumindest einen Lichtleitereinheit 5 leitbar ist.

D.h. das ausgesendete Licht verläuft entsprechend dem Pfeil Pf von der zumindest einen Lichtquelle 2 durch die Öffnung 4 in der bedruckten Leiterplatte LP durch und seitlich an der Maßverkörperung M vorbei. Nach der Maßverkörperung M trifft das ausgesendete Licht auf die zumindest eine Lichtleitereinheit 5 und wird zurück Richtung der zumindest einen Sensoreinheit 3 reflektiert.

Hierbei durchquert das ausgesendete Licht die Maßverkörperung M.

Die zumindest eine Lichtleitereinheit 5 ist vorteilhafterweise auf die zweite bedruckbare Seite S2 der bedruckten Leiterplatte LP gesteckt, geklebt, gelötet oder dergleichen befestigt, so dass eine einfache Herstellung der optoelektronischen Vorrichtung 1 erzielbar ist.

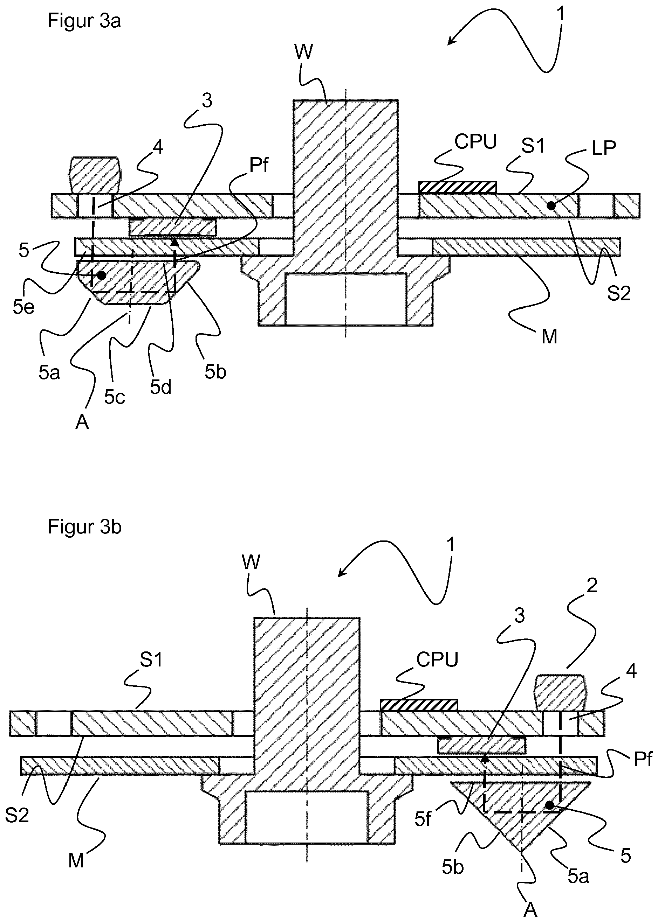

In den Figuren 3a und 3b sind schematisch zwei weitere bevorzugte Ausführungsbeispiele der erfindungsgemäßen optoelektronischen Vorrichtung 1 gezeigt, wobei die gleichen Komponenten wie in den Ausführungsbeispielen der Figuren 1 oder 2 die gleichen Bezugszeichen aufweisen.

Bei diesen Ausführungsbeispielen ist die Maßverkörperung M gegenüber der zumindest einen Lichtquelle 2 und der zumindest einen Lichtleitereinheit 5 derart angeordnet, dass das ausgesendete Licht von der zumindest einen Lichtquelle 2 durch die Maßverkörperung M zu der zumindest einen Lichtleitereinheit 5 leitbar ist.

D.h. das ausgesendete Licht verläuft entsprechend dem Pfeil Pf von der zumindest einen Lichtquelle 2 durch die Öffnung 4 in der bedruckten Leiterplatte LP durch und durchquert im Gegensatz zu den beiden vorherigen Ausführungsbeispielen die Maßverkörperung M. Nach der Durchquerung der Maßverkörperung M trifft das ausgesendete Licht auf die zumindest eine Lichtleitereinheit 5 und wird zurück Richtung der zumindest einen Sensoreinheit 3 reflektiert.

Somit durchquert das ausgesendete Licht bei den in den Figuren 3a und 3b gezeigten Ausführungsbeispielen auf seinem Weg von der zumindest einen Lichtquelle 2 zu der zumindest einen Sensoreinheit 3 die Maßverkörperung M zweimal.

Nach der ersten Durchquerung der Maßverkörperung M trifft das ausgesendete Licht auf die trapezförmige oder Prisma-förmige Lichtleitereinheit 5.

Vorteilhafterweise können mehrere Lichtquellen 2 und entsprechend mehrere Sensoreinheiten 3 und Lichtleitereinheiten 5 für unterschiedliche Maßspuren der Maßverkörperung M vorgesehen sein, so dass eine Mehrzahl von Signalen mit unterschiedliche Informationen gleichzeitig erfasst werden können.

Hierbei wird durch geeignete Anordnungen der zusammengehörenden Komponenten, Lichtquelle 2, Öffnung 4, Sensoreinheit 3 und Lichtleitereinheit 5, der optoelektronischen Vorrichtung 1 auf der bedruckten Leiterplatte LP keine wesentliche Größenänderung der gesamten Vorrichtung erreicht.

Vorteilhafterweise weist die zumindest eine Lichtquelle 2 jeweils eine Linse auf, die das ausgesendete Licht in eine Richtung zur zumindest einen Lichtleitereinheit 5 bündelt. Hierdurch können Lichtverluste der zumindest einen Lichtquelle 2 reduziert werden.

In den beschriebenen Ausführungsbeispielen gemäß den Figuren weist die Lichtleitereinheit 5 vorzugsweise eine trapezförmige oder Prisma-förmige Ausgestaltung auf. Hierbei ist es denkbar, dass die Lichtleitereinheit 5 auch nur eine einer der zumindest einen Lichtquelle 2 und der Öffnung 4 gegenüberliegende Fläche, z.B. eines Flansches oder einer Gehäusewandung, umfasst, die derart verarbeitet ist, so dass das ausgesendete Licht von der zumindest einen Lichtquelle 2 durch die Öffnung 4 auf die verarbeitete Fläche trifft und von der verarbeiteten Fläche derart auf die Maßverkörperung M zurück geleitet wird.

Die Fläche ist somit lichtreflektierend verarbeitet bzw. poliert, wobei die Fläche Kanten aufweist, die das ausgesendete Licht in gleicher Weise wie die trapezförmige oder Prisma-förmige Lichtleitereinheit 5 auf die Maßverkörperung M leiten.

### Bezugszeichenliste

- 1: Optoelektronische Vorrichtung
- 2: Zumindest eine Lichtquelle
- 3: Zumindest eine Sensoreinheit
- 4: Öffnung
- 5: Zumindest eine Lichtleitereinheit
- 5a, 5b, 5c, 5d: Seitenflächen der Lichtleitereinheit
- 5e: Zylindrischer Abschnitt der Lichtleitereinheit
- 5f: Grundseite der Prisma-Form
- 6: Lichtundurchlässige Hülse
- A: Mittelachse der Lichtleitereinheit
- CPU: Auswerteeinheit
- LP: Bedruckte Leiterplatte
- M: Maßverkörperung
- Pf: Verlaufpfeil
- S1: Erste bedruckbare Seite der bedruckten Leiterplatte
- S2: Zweite bedruckbare Seite der bedruckten Leiterplatte
- W: Welle

## Patentansprüche

1. Optoelektronische Vorrichtung (1) zum Erfassen einer Längen- bzw. Winkelinformation, mit
einer Maßverkörperung (M),
einer bedruckten Leiterplatte (LP), die eine erste bedruckbare Seite (S1) und eine der ersten bedruckbaren Seite (S1) gegenüberliegende zweite bedruckbare Seite (S2) aufweist,
zumindest einer Lichtquelle (2), und
zumindest einer Sensoreinheit (3),
wobei die zumindest eine Lichtquelle (2) auf der ersten bedruckbaren Seite (S1) und die zumindest eine Sensoreinheit (3) auf der zweiten bedruckbaren Seite (S2) der bedruckten Leiterplatte (LP) angeordnet sind, und wobei zumindest eine Lichtleitereinheit (5) vorgesehen ist, die das von der zumindest einen Lichtquelle (2) durch eine Öffnung (4) in der bedruckten Leiterplatte (LP) ausgesendete Licht auf die zweite bedruckbare Seite (S2) der bedruckten Leiterplatte (LP) derart leitet, dass das ausgesendete Licht senkrecht auf die Maßverkörperung (M) trifft, die vor der zumindest einen Sensoreinheit (3) angeordnet ist.

2. Optoelektronische Vorrichtung (1) nach Anspruch 1, wobei die zumindest eine Lichtquelle (2) mittels eines Reflow Prozesses auf die bedruckte Leiterplatte (LP) derart verlötet ist, dass die zumindest eine Lichtquelle (2) über die Öffnung (4) der bedruckten Leiterplatte (LP) angeordnet ist.

3. Optoelektronische Vorrichtung (1) nach Anspruch 1 oder 2, wobei die Öffnung (4) der bedruckten Leiterplatte (LP) aus einer Durchbohrung besteht.

4. Optoelektronische Vorrichtung (1) nach einem der vorhergehenden Ansprüche, wobei die zumindest eine Lichtleitereinheit (5) direkt über der Öffnung (4) und auf der zweiten bedruckbaren Seite (S2) der bedruckten Leiterplatte (LP) angeordnet ist.

5. Optoelektronische Vorrichtung (1) nach einem der vorhergehenden Ansprüche, wobei die zumindest eine Lichtleitereinheit (5) zwei zu der zweiten bedruckbaren Seite (S2) der bedruckten Leiterplatte (LP) schräggestellten Seitenflächen (5a, 5b) aufweist, die seitensymmetrisch zueinander angeordnet sind, wobei die Symmetrieachse die Mittelachse (A) der zumindest einen Lichtleitereinheit (5) ist.

6. Optoelektronische Vorrichtung (1) nach einem der vorhergehenden Ansprüche, wobei die zumindest eine Lichtleitereinheit (5) eine Trapezform aufweist, deren parallele Seiten (5c, 5d) parallel zu der zweiten bedruckbaren Seite (S2) der bedruckten Leiterplatte (LP) angeordnet sind und die längere parallele Seite (5d) der Trapezform zwischen der zweiten bedruckbaren Seite (S2) der bedruckten Leiterplatte (LP) und der kürzeren parallelen Seite (5c) der Trapezform liegt.

7. Optoelektronische Vorrichtung (1) nach Anspruch 6, wobei die zumindest eine Lichtleitereinheit (5) einen zylindrischen Abschnitt (6) zwischen der Öffnung (4) der bedruckten Leiterplatte (LP) und der Trapezform aufweist.

8. Optoelektronische Vorrichtung (1) nach einem der Ansprüche 6 oder 7, wobei die Außenflächen der schräggestellten Seitenflächen (5a, 5b) der zumindest einen Lichtleitereinheit (5) beschichtet sind, so dass ein Spiegeleffekt im Inneren der zumindest einen Lichtleitereinheit (5) erzeugbar ist.

9. Optoelektronische Vorrichtung (1) nach einem der Ansprüche 1 bis 5, wobei die zumindest eine Lichtleitereinheit (5) eine Prisma-Form aufweist, deren Grundseite (5f) der Maßverkörperung (M) und der zumindest einen Sensoreinheit (3) zugewendet ist.

10. Optoelektronische Vorrichtung (1) nach Anspruch 9, wobei die Prisma-Form ein gleichschenkliges Dreieck mit der Grundseite (5f) und zwei Seitenflächen (5a, 5b) aufweist.

11. Optoelektronische Vorrichtung (1) nach einem der Ansprüche 9 bis 10, wobei die Außenflächen der zwei Seitenflächen (5a, 5b) der zumindest einen Lichtleitereinheit (5) unbeschichtet sind und die Prisma-Form ist derart verarbeitet, dass das ausgesendete Licht durch die zwei Seitenflächen (5a, 5b) in Richtung der zumindest einen Sensoreinheit (3) total rückreflektierbar ist.

12. Optoelektronische Vorrichtung (1) nach einem der vorhergehenden Ansprüche, wobei die zumindest eine Lichtleitereinheit (5) eine gleichmäßige Abstrahlung am Lichtaustritt auf die Maßverkörperung (M) aufweist.

13. Optoelektronische Vorrichtung (1) nach einem der vorhergehenden Ansprüche, wobei die zumindest eine Lichtleitereinheit (5) auf die zweite bedruckbare Seite (S2) der bedruckten Leiterplatte (LP) gesteckt, geklebt, gelötet oder dergleichen befestigt ist.

14. Optoelektronische Vorrichtung (1) nach zumindest einem der vorhergehenden Ansprüche, wobei die Maßverkörperung (M) gegenüber der zumindest einen Lichtquelle (1) und der zumindest einen Lichtleitereinheit (5) derart angeordnet ist, dass das ausgesendete Licht von der zumindest einen Lichtquelle (2) seitlich an der Maßverkörperung (M) vorbei zu der zumindest einen Lichtleitereinheit (5) leitbar ist oder das ausgesendete Licht von der zumindest einen Lichtquelle (2) durch die Maßverkörperung (M) zu der zumindest einen Lichtleitereinheit (5) leitbar ist.

## Claims

1. An optoelectronic device (1) for detecting a length or angle information, comprising:
a solid measure (M),
a printed circuit board (LP) having a first printable side (S1) and a second printable side (S2) opposite the first printable side (S1)
at least one light source (2), and
at least one sensor unit (3),
wherein the at least one light source is arranged on the first printable side and the at least one sensor unit is arranged on the second printable side of the printed circuit board, and wherein at least one optical waveguide unit is provided which directs the light emitted from the at least one light source (2) through an opening (4) in the printed circuit board (LP) to the second printable side (S2) of the printed circuit board (LP) (M), which is arranged in front of the at least one sensor unit (3).

2. The optoelectronic device as claimed in claim 1, wherein the at least one light source (2) is soldered to the printed circuit board (LP) by means of a reflow process in such a way that the at least one light source is arranged above the opening of the printed circuit board (LP).

3. Optoelectronic device (1) according to claim 1 or 2, wherein the opening (4) of the printed circuit board (LP) consists of a through-hole.

4. The optoelectronic device as claimed in any preceding claim, wherein the at least one optical waveguide unit (5) is arranged directly above the opening (4) and on the second printable side (S2) of the printed circuit board (LP).

5. The optoelectronic device as claimed in any preceding claim, wherein the at least one optical waveguide unit (5) has two side surfaces, which are inclined side-by-side with respect to the second printable side (S2) of the printed circuit board (LP), the axis of symmetry being the central axis (A) of the at least one optical waveguide unit (5).

6. The optoelectronic device as claimed in any preceding claim, wherein the at least one optical waveguide unit (5) has a trapezoidal shape whose parallel sides (5c, 5d) are arranged parallel to the second printable side (S2) of the printed circuit board (LP) and the longer parallel side (5d) of the trapezoid shape lies between the second printable side (S2) of the printed circuit board (LP) and the shorter parallel side (5c) of the trapezoid shape.

7. The optoelectronic device as claimed in claim 6, wherein the at least one optical waveguide unit (5) has a cylindrical section (6) between the opening (4) of the printed circuit board (LP) and the trapezoidal shape.

8. The optoelectronic device as claimed in claim 6 or 7, wherein the outer surfaces of the inclined side surfaces (5a, 5b) of the at least one optical waveguide unit (5) are coated so that a mirror effect can be produced inside the at least one optical waveguide unit (5).

9. The optoelectronic device as claimed in any claim 1 to 5, wherein the at least one optical waveguide unit (5) has a prism shape whose base side (5f) is allocated to the solid measure (M) and to the at least one sensor unit (3).

10. The optoelectronic device (1) according to claim 9, wherein the prism shape has an isosceles triangle with the base side (5f) and two side surfaces (5a, 5b).

11. The optoelectronic device as claimed in claim 9 or 10, wherein the outer surfaces of the two side faces (5a, 5b) of the at least one optical waveguide unit (5) are uncoated, and the prism shape is processed in such a way that the light emitted can be totally back-reflected by the two side surfaces (5a, 5b) in the direction of the at least one sensor unit (3).

12. The optoelectronic device as claimed in any preceding claim, wherein at least one optical waveguide unit (5) has a uniform emission of light at the light exit towards the solid measure (M).

13. The optoelectronic device as claimed in any preceding claim, wherein the at least one optical waveguide unit (5) is plugged, glued, soldered or the like attached to the second printable side (S2) of the printed circuit board (LP).

14. The optoelectronic device as claimed in any preceding claim, wherein the solid measure (M) is arranged opposite to the at least one light source (1) and to the at least one light guide unit (5) such that the light emitted from the at least one light source (5) is guided to the at least one optical waveguide unit (5) passing the solid measure (M) sideways, or the light emitted from the at least one light source (2) can be passed through the solid measure (M) to the at least one optical waveguide unit (5).

## Revendications

1. Dispositif optoélectronique (1) pour détecter une information de longueur ou d'angle, comprenant:
une mesure solide (M),
une carte de circuit imprimé (LP) ayant un premier côté imprimable (S1) et un deuxième côté imprimable (S2) opposé au premier côté imprimable (S1),
au moins une source lumineuse (2), et
au moins une unité de détection (3),
dans lequel au moins une source de lumière (2) est agencée sur le premier côté imprimable (S1) et au moins une unité de détection (3) est agencée sur le deuxième côté imprimable (S2) de la carte de circuit imprimé (LP), et dans lequel au moins une unité de guide d'onde optique (5) est prévue qui dirige la lumière émise par au moins une source de lumière (2) à travers une ouverture (4) de la carte de circuit imprimé (LP) vers le deuxième côté imprimable (S2) de la carte de circuit imprimé (LP) de telle manière que la lumière émise parvienne perpendiculairement à la mesure solide (M) qui est disposée devant au moins une unité de détection (3).

2. Dispositif optoélectronique selon la revendication 1, **caractérisé en ce qu'**au moins une source lumineuse (2) est soudée sur la carte de circuit imprimé (LP) au moyen d'un procédé de refusion de telle sorte qu'au moins une source lumineuse) est disposée au-dessus de l'ouverture de la carte de circuit imprimé (LP).

3. Dispositif optoélectronique (1) selon la revendication 1 ou 2, **caractérisé en ce que** l'ouverture (4) de la carte de circuit imprimé (LP) est constituée par un trou traversant.

4. Dispositif optoélectronique selon l'une des revendications précédentes, dans lequel au moins une unité de guide d'onde optique (5) est disposée directement au-dessus de l'ouverture (4) et au deuxième côté imprimable (S2) de la carte de circuit imprimé (LP).

5. Dispositif optoélectronique selon l'une des revendications précédentes, **caractérisé en ce qu'**au moins une unité de guide d'onde optique (5) présente deux surfaces latérales inclinées (5a, 5b) côte à côte par rapport au deuxième côté imprimable (S2) de la carte de circuit imprimé (LP) qui sont disposés symétriques latéralement l'un par rapport à l'autre, dans lequel l'axe de symétrie est l'axe central (A) d'au moins une unité de guide d'onde optique (5).

6. Dispositif optoélectronique selon l'une des revendications précédentes, dans lequel au moins une unité de guide d'onde optique (5) présente une forme trapézoïdale dont les côtés parallèles (5c, 5d) sont disposés parallèlement au deuxième côté imprimable (S2) de la face imprimée (LP) et le côté parallèle plus long (5d) de la forme trapézoïdale est situé entre le deuxième côté imprimable (S2) de la carte de circuit imprimé (LP) et le côté parallèle plus court (5c) de la forme trapézoïdale.

7. Dispositif optoélectronique selon la revendication 6, **caractérisé en ce qu'**au moins une unité de guide d'onde optique (5) présente une section cylindrique entre l'ouverture (4) de la carte de circuit imprimé (LP) et la forme trapézoïdale.

8. Dispositif optoélectronique selon la revendication 6 ou 7, **caractérisé en ce que** les surfaces extérieures des surfaces latérales inclinées (5a, 5b) d'au moins une unité de guide d'onde optique (5) sont revêtues de manière pour produire un effet miroir à l'intérieur d'au moins une unité de guide d'onde optique (5).

9. Dispositif optoélectronique selon l'une des revendications 1 à 5, **caractérisé en ce qu'**au moins une unité de guide d'onde optique (5) présente une forme de prisme dont le côté de base est tourné vers la mesure solide (M) et au moins une unité de détection (3).

10. Dispositif optoélectronique (1) selon la revendication 9, **caractérisé en ce que** la forme de prisme présente un triangle isocèle avec le côté de base (5f) et deux surfaces latérales (5a, 5b).

11. Dispositif optoélectronique selon l'une des revendications 9 à 10, **caractérisé en ce que** les surfaces extérieures des deux surfaces latérales (5a, 5b) d'au moins une unité de guide d'onde optique (5) ne sont pas revêtues et la forme du prisme est traitée de telle manière que la lumière émise est totalement réfléchie par les deux surfaces latérales (5a, 5b) en direction d'au moins une unité de détection (3).

12. Dispositif optoélectronique selon l'une des revendications précédentes, dans lequel au moins une unité de guide d'onde optique (5) présente une émission uniforme à la sortie de lumière sur la mesure solide (M).

13. Dispositif optoélectronique selon l'une des revendications précédentes, **caractérisé en ce qu'**au moins une unité de guide d'onde optique (5) est bouchée, collée, brasée, fixée ou similaire sur le deuxième côté imprimable (S2) de la carte de circuit imprimé (LP).

14. Dispositif optoélectronique selon l'une des revendications précédentes, **caractérisé en ce que** la mesure solide (M) est agencée à au moins une source lumineuse (2) et à au moins une unité de guide d'onde optique (5) de telle sorte que la lumière émise par au moins une source de lumière (2) est guidée en passant la mesure solide (M) à au moins une unité de guide d'onde optique (5) ou la lumière émise par au moins une source de lumière (2) est guidée à travers la mesure solide (M) à au moins une unité de guide d'onde optique (5).
